# EUROPEAN PATENT APPLICATION

(11) **EP 4 682 003 A1**
(43) Date of publication of application: **21.01.2026**
(21) Application number: 24787750.9
(22) Date of filing: 15.01.2024
(51) Int. Cl.: B60W 30/06, B60W 60/00, B60W 40/02, B60W 50/08, G08G 1/14

(54) **CONTROL METHOD, CONTROL APPARATUS, AND INTELLIGENT DRIVING DEVICE**

(30) Priority: 14.04.2023 CN 202310416934
(71) Applicant: Shenzhen Yinwang Intelligent Technologies Co., Ltd., Shenzhen, Guangdong 518110 (CN)
(72) Inventor: QIN, Cai, Shenzhen, Guangdong 518129 (CN); SHEN, Yujie, Shenzhen, Guangdong 518129 (CN); XU, Ting, Shenzhen, Guangdong 518129 (CN)
(74) Representative: MERH-IP Matias Erny Reichl Hoffmann Patentanwälte PartG mbB
(86) International application number: PCT/CN2024/072328
(87) International publication number: WO 2024/212643

(57) **Abstract**

A control method, a control apparatus, and an intelligent driving device are provided. The method includes: receiving a first instruction; controlling, according to the first instruction, a first interface to display a first icon, where the first icon indicates a first boundary and a second boundary of a target area of the intelligent driving device; and controlling, based on the first icon, the intelligent driving device to travel from the first boundary or the second boundary to the target area. The method can be applied to an intelligent vehicle or an electric vehicle, to improve passage efficiency and safety of the vehicle, thereby improving a success rate and efficiency of auto parking, and improving user experience.

## Description

This application claims priority to Chinese Patent Application No. 202310416934.2, filed with the China National Intellectual Property Administration on April 14, 2023 and entitled "CONTROL METHOD, CONTROL APPARATUS, AND INTELLIGENT DRIVING DEVICE", which is incorporated herein by reference in its entirety.

### TECHNICAL FIELD

This application relates to the field of intelligent driving, and more specifically, to a control method, a control apparatus, and an intelligent driving device.

### BACKGROUND

Auto parking (auto parking, AP) means that a vehicle is automatically parked into a parking spot, that is, an autonomous driving system may help a user park the vehicle into the parking spot semi-automatically or fully automatically. The auto parking may include auto parking assist (auto parking assist, APA), remote parking assist (remote parking assist, RPA), auto valet parking (auto valet parking, AVP), and the like.

A current auto parking system supports controlling, based on a parking spot selected by a user, the vehicle to park into the parking spot. However, when the auto parking system plans a parking path based on the parking spot selected by the user, the planned parking path is single. In a complex driving environment, for example, an obstacle occupies a traveling path of the vehicle, passage efficiency of the vehicle is low, and even the vehicle collides with the obstacle or a parking failure is caused.

In view of this, a control solution that can be used to improve the passage efficiency of the vehicle in the complex driving environment needs to be urgently developed.

### SUMMARY

This application provides a control method, a control apparatus, and an intelligent driving device, to improve passage efficiency and safety of a vehicle, thereby improving a success rate and efficiency of auto parking, and improving user experience.

According to a first aspect, a control method is provided. The method may be performed by an intelligent driving device, or may be performed by a computing platform of the intelligent driving device, or may be performed by a chip or a circuit used for the intelligent driving device, or may be performed by a cloud server or a mobile terminal associated with the intelligent driving device. This is not specifically limited in this application.

The intelligent driving device in this application may include a vehicle on a road, a vehicle on water, an air vehicle, an industrial device, an agricultural device, an entertainment device, or the like. For example, the intelligent driving device may be a vehicle in a broad sense, and may be a vehicle (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not limited in embodiments of this application. For another example, the intelligent driving device may be a vehicle like an aircraft or a ship.

The method includes: receiving a first instruction; controlling, according to the first instruction, a first interface to display a first icon, where the first icon indicates a first boundary and a second boundary of a target area of the intelligent driving device; and controlling, based on the first icon, the intelligent driving device to travel from the first boundary or the second boundary to the target area.

In the foregoing technical solution, a movement path may be planned for the intelligent driving device based on a plurality of boundaries of the target area selected by a user. This helps improve flexibility of planning the movement path of the intelligent driving device, improves traveling efficiency and a parking success rate of the intelligent driving device, and improves user experience.

For example, the first instruction is generated when any one of the following operations is performed:
1. An operation of sending a specific voice instruction by a user, for example, "Smart assistant, enable remote parking", "Smart assistant, park into the first location on the right", and "Smart assistant, turn the orientation of the virtual parking spot".
2. At least one icon indicating a parking area is displayed on the first interface, where the at least one icon includes a first icon; and the first instruction is generated when an operation of tapping the first icon by the user is detected.
3. The first interface displays only one icon indicating the parking area, and when no operation of the user is detected within first duration, the first instruction is generated, where the only icon indicating the parking area is the first icon. The first duration may be 3 seconds, 5 seconds, or other duration.
4. The first interface displays an icon or an image indicating a location of the intelligent driving device and an image of an environment around the intelligent driving device. When it is detected that the user touches and holds the icon or the image indicating the location of the intelligent driving device, the first instruction is generated. Further, the first icon is controlled, according to the first instruction, to be displayed at a location of the icon or the image indicating the location of the intelligent driving device. The touching and holding may be that duration of tapping the icon or the image exceeds second duration, and the second duration may be 1 second, 2 seconds, or other duration.
5. The first interface displays an icon or an image indicating a location of the intelligent driving device and an image of an environment around the intelligent driving device. When it is detected that the user touches and holds the icon or the image indicating the location of the intelligent driving device, and releases a finger after the finger keeps touching and holding the icon or the image to another location on the first interface, the first instruction is generated. Further, the first icon is controlled, according to the first instruction, to be displayed at the another location.
6. The first interface displays an icon or an image indicating a location of the intelligent driving device and an image of an environment around the intelligent driving device. When an operation of pressing and holding a blank area by the user is detected, the first instruction is generated. Further, the first icon is controlled, according to the first instruction, to be displayed in the blank area.
7. The first interface displays an icon or an image indicating a location of the intelligent driving device and an image of an environment around the intelligent driving device. When an operation of tapping in a blank area by the user on the first interface after tapping an icon creation button is detected, the first instruction is generated. Further, the first icon is controlled, according to the first instruction, to be displayed in the blank area.
8. A third icon is displayed on the first interface, and when an operation of the user on a related location of the third icon is detected, the first instruction is generated. Further, the first icon is displayed according to the first instruction. A pose, indicated by the third icon, of the intelligent driving device is different from a pose, indicated by the first icon, of the intelligent driving device. The related location of the third icon includes but is not limited to a rotation button of the third icon, a double-headed arrow in the middle of the third icon, and a blank location of the third icon. The operation of the user on the related location of the third icon includes but is not limited to: tapping, touching and holding and rotating, and touching and holding and dragging.

With reference to the first aspect, in some implementations of the first aspect, the controlling the intelligent driving device to travel from the first boundary or the second boundary to the target area includes: when an obstacle exists on a first planned path, controlling the intelligent driving device to travel from the first boundary to the target area, where the first planned path indicates the intelligent driving device to travel from a current area to the target area through the second boundary; or when an obstacle exists on a second planned path, controlling the intelligent driving device to travel from the second boundary to the target area, where the second planned path indicates the intelligent driving device to travel from the current area to the target area through the first boundary.

In the foregoing technical solution, when the obstacle hinders the intelligent driving device from traveling from one boundary to the target area, the intelligent driving device may be controlled to travel from the other boundary to the target area. This helps improve traveling efficiency and a parking success rate of the intelligent driving device, reduces a probability that the intelligent driving device collides with the obstacle, and improves safety of the intelligent driving device.

With reference to the first aspect, in some implementations of the first aspect, the controlling, according to the first instruction, a first interface to display a first icon includes: controlling, according to the first instruction, the first icon to be displayed at a first location on the first interface; and when an obstacle exists in an actual area indicated by the first location, or a distance between a boundary of the actual area and the obstacle is less than or equal to a preset distance threshold, controlling the first icon to be displayed at a second location of the first interface instead of the first location.

For example, the preset distance threshold may be 5 centimeters, 10 centimeters, or another value.

For example, there is no obstacle in an actual area indicated by the second location, and a distance between a boundary of the actual area and the obstacle is greater than the preset distance threshold.

It should be noted that the actual area in this embodiment of this application is an area in a real scenario.

In some possible implementations, the second location may be determined based on a location at which an image of the obstacle is displayed on the first interface. Alternatively, an actual location of the parking area may be determined based on an actual location of the obstacle, and then the actual location is mapped to the second location on the first interface.

In the foregoing technical solution, the target area may be adaptively adjusted based on the location of the obstacle, so that the intelligent driving device plans a movement path based on an adjusted target area. This helps improve intelligence of the intelligent driving device, and further improves driving experience of the user. This further helps reduce the probability that the intelligent driving device collides with the obstacle in a traveling process, and improves safety of the intelligent driving device.

With reference to the first aspect, in some implementations of the first aspect, the method further includes: controlling, according to a second instruction, the first interface to display a virtual device image, where the virtual device image is located at a third location on the first interface, and the virtual device image indicates the current area of the intelligent driving device; and the controlling, according to the first instruction, a first interface to display a first icon includes: controlling, according to the first instruction and based on the third location, the first icon to be displayed at a fourth location on the first interface.

In the foregoing technical solution, the first interface may be controlled to simultaneously display the first icon and the icon or the image indicating the location of the intelligent driving device. In a process in which the user adjusts the target area by moving the first icon, a location of the moved first icon may be determined based on a location of the intelligent driving device. This helps the user efficiently select the target area, improves passage efficiency and/or parking efficiency, and further improves user experience.

With reference to the first aspect, in some implementations of the first aspect, the fourth location partially or completely coincides with the third location.

In the foregoing technical solution, the first icon can completely or partially coincide with the icon or the image indicating the location of the intelligent driving device. This helps the user adjust the pose of the first icon on the icon or the image indicating the location of the intelligent driving device, and implements fine-tuning on the location of the intelligent driving device and a posture of the intelligent driving device. In this way, convenience of adjusting the pose of the intelligent driving device by the user is improved, and user experience is improved.

With reference to the first aspect, in some implementations of the first aspect, the target area includes a parking area, the first interface further includes a second icon, the second icon indicates a non-parking area, and the controlling, according to the first instruction, a first interface to display a first icon includes: controlling, according to the first instruction, the first interface to display the first icon in a first color and display the second icon in a second color.

In the foregoing technical solution, the icon indicating the parking area and the icon indicating the non-parking area are respectively displayed in different colors, so that the user can distinguish between areas in which parking is allowed or areas in which traveling is allowed, to improve efficiency of selecting the target area, and improve passage efficiency and/or parking efficiency of the intelligent driving device.

With reference to the first aspect, in some implementations of the first aspect, the first icon indicates a first pose of the intelligent driving device in the target area, and the controlling, according to a first instruction, a first interface to display a first icon includes: controlling, according to the first instruction, the first interface to switch from displaying a third icon to displaying the first icon, where the third icon indicates a second pose of the intelligent driving device in the target area.

In the foregoing technical solution, a method for conveniently adjusting the pose of the intelligent driving device is provided for the user, so that a movement track can be planned for the intelligent driving device based on the third icon adjusted by the user. In a complex driving environment, a method for conveniently adjusting the pose of the intelligent driving device is provided for the user.

With reference to the first aspect, in some implementations of the first aspect, a head orientation that is indicated by the first pose and that is of the intelligent driving device is opposite to a head orientation that is indicated by the second pose and that is of the intelligent driving device.

In the foregoing technical solution, the intelligent driving device can be controlled to turn around in place by one click, to improve a sense of technology experienced by the user in a remote parking process.

With reference to the first aspect, in some implementations of the first aspect, an included angle between a central axis that is indicated by the first pose and that is of the intelligent driving device and a central axis that is indicated by the second pose and that is of the intelligent driving device is greater than 0 degrees (degree, °) and less than 180°.

In the foregoing technical solution, posture adjustment of the intelligent driving device at any angle in place can be implemented. This improves convenience of posture adjustment of the intelligent driving device in a parking or traveling process.

According to a second aspect, a control apparatus is provided. The apparatus includes: a transceiver unit, configured to receive a first instruction; a first processing unit, configured to control, according to the first instruction, a first interface to display a first icon, where the first icon indicates a first boundary and a second boundary of a target area of an intelligent driving device; and a second processing unit, configured to control, based on the first icon, the intelligent driving device to travel from the first boundary or the second boundary to the target area.

With reference to the second aspect, in some implementations of the second aspect, the second processing unit is configured to: when an obstacle exists on a first planned path, control the intelligent driving device to travel from the first boundary to the target area, where the first planned path indicates the intelligent driving device to travel from a current area to the target area through the second boundary; or when an obstacle exists on a second planned path, control the intelligent driving device to travel from the second boundary to the target area, where the second planned path indicates the intelligent driving device to travel from the current area to the target area through the first boundary.

With reference to the second aspect, in some implementations of the second aspect, the first processing unit is configured to: control, according to the first instruction, the first icon to be displayed at a first location on the first interface; and when an obstacle exists in an actual area indicated by the first location, or a distance between a boundary of the actual area and the obstacle is less than or equal to a preset distance threshold, control the first icon to be displayed at a second location of the first interface instead of the first location.

With reference to the second aspect, in some implementations of the second aspect, the first processing unit is further configured to: control, according to a second instruction, the first interface to display a virtual device image, where the virtual device image is located at a third location on the first interface, and the virtual device image indicates the current area of the intelligent driving device; and control, according to the first instruction and based on the third location, the first icon to be displayed at a fourth location on the first interface.

With reference to the second aspect, in some implementations of the second aspect, the fourth location partially or completely coincides with the third location.

With reference to the second aspect, in some implementations of the second aspect, the target area includes a parking area, the first interface further includes a second icon, the second icon indicates a non-parking area, and the first processing unit is configured to: control, according to the first instruction, the first interface to display the first icon in a first color and display the second icon in a second color.

With reference to the second aspect, in some implementations of the second aspect, the first icon indicates a first pose of the intelligent driving device in the target area, and the first processing unit is configured to: control, according to the first instruction, the first interface to switch from displaying a third icon to displaying the first icon, where the third icon indicates a second pose of the intelligent driving device in the target area.

With reference to the second aspect, in some implementations of the second aspect, a head orientation that is indicated by the first pose and that is of the intelligent driving device is opposite to a head orientation that is indicated by the second pose and that is of the intelligent driving device.

With reference to the second aspect, in some implementations of the second aspect, an included angle between a central axis that is indicated by the first pose and that is of the intelligent driving device and a central axis that is indicated by the second pose and that is of the intelligent driving device is greater than 0° and less than 180°.

According to a third aspect, a control apparatus is provided. The apparatus includes: a memory, configured to store a computer program; and a processor, configured to execute the computer program stored in the memory, so that the apparatus performs the method in any possible implementation of the first aspect.

According to a fourth aspect, an intelligent driving device is provided, and the intelligent driving device includes the apparatus in any possible implementation of the second aspect or the third aspect.

With reference to the fourth aspect, in some implementations of the fourth aspect, the intelligent driving device is a vehicle.

According to a fifth aspect, a computer program product is provided. The computer program product includes computer program code. When the computer program code is run on a computer, the computer is enabled to perform the method in any possible implementation of the first aspect.

It should be noted that all or some of the computer program code may be stored in a first storage medium. The first storage medium may be encapsulated together with a processor may be encapsulated separately from a processor.

According to a sixth aspect, a computer-readable medium is provided. The computer-readable medium stores instructions. When the instructions are executed by a processor, the processor is enabled to implement the method in any possible implementation of the first aspect.

According to a seventh aspect, a chip is provided. The chip includes a circuit, and the circuit is configured to perform the method in any possible implementation of the first aspect.

### BRIEF DESCRIPTION OF DRAWINGS

FIG. 1 is a functional block diagram of an intelligent driving device according to an embodiment of this application;
FIG. 2 is a diagram of a system architecture for implementing a control method according to an embodiment of this application;
FIG. 3 is a schematic flowchart of a control method according to an embodiment of this application;
FIG. 4 is an HMI according to an embodiment of this application;
FIG. 5 is a diagram of an application scenario of a control method according to an embodiment of this application;
FIG. 6 is another HMI according to an embodiment of this application;
FIG. 7(a) and FIG. 7(b) are other HMIs according to an embodiment of this application;
FIG. 8 is another HMI according to an embodiment of this application;
FIG. 9 is a block diagram of a control apparatus according to an embodiment of this application; and
FIG. 10 is another block diagram of a control apparatus according to an embodiment of this application.

### DESCRIPTION OF EMBODIMENTS

In the descriptions of embodiments of this application, "/" means "or" unless otherwise specified. For example, A/B may represent A or B. In this specification, "and/or" describes an association relationship between associated objects and represents that three relationships may exist. For example, A and/or B may represent the following three cases. Only A exists, both A and B exist, and only B exists. In this application, "at least one" means one or more, and "plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

As described above, when a current auto parking system plans a parking track based on a parking spot selected by a user, a planned parking track is simple. When a driving environment is complex, passage efficiency of a vehicle is low, and even a parking failure may be caused.

In view of this, embodiments of this application provide a control method and apparatus, and an intelligent driving device, to plan a movement path based on different boundaries of a target area selected by a user, and further select a movement path through which the intelligent driving device can travel to the target area without an obstacle, to control the intelligent driving device to travel. This helps improve passage efficiency and safety of the intelligent driving device, and further improves user experience.

The following describes technical solutions in embodiments of this application with reference to accompanying drawings.

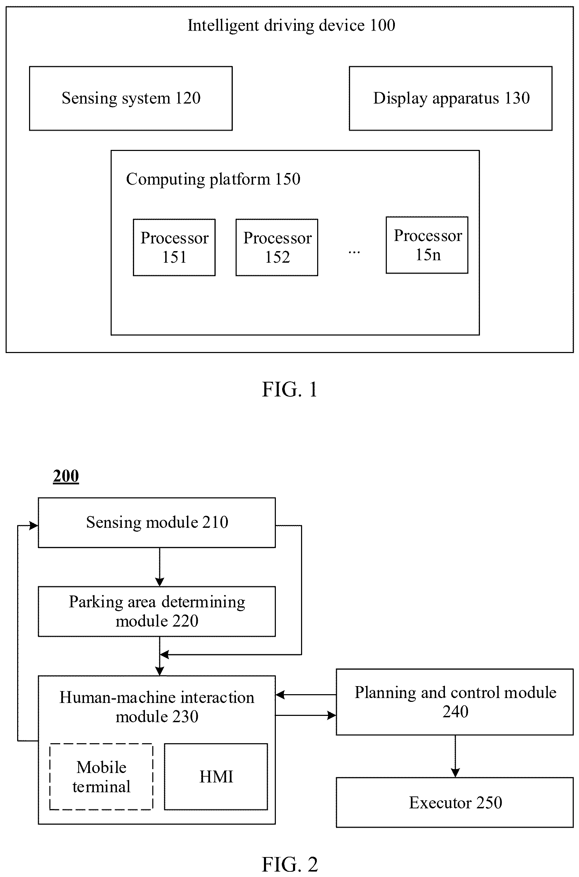

FIG. 1 is a functional block diagram of an intelligent driving device according to an embodiment of this application. As shown in FIG. 1, an intelligent driving device 100 may include a sensing system 120, a display apparatus 130, and a computing platform 150. The sensing system 120 may include several sensors configured to sense information about an environment around the intelligent driving device 100. For example, the sensing system 120 may include a positioning system. The positioning system may be a global positioning system (global positioning system, GPS), a BeiDou system, or another positioning system. For another example, the sensing system 120 may include one or more of an inertial measurement unit (inertial measurement unit, IMU), a lidar, a millimeter-wave radar, an ultrasonic radar, and a camera apparatus.

Some or all functions of the intelligent driving device 100 may be controlled by the computing platform 150. The computing platform 150 may include processors 151 to 15n. The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may further be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The display apparatus 130 in a cockpit is mainly classified into two types: a first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cockpit, for example, a digital dashboard display and a central display screen. In some possible implementations, one or more of the vehicle-mounted displays may be a human machine interface (human machine interface, HMI). For example, the central display screen may be an HMI. The head-up display is also referred to as a head-up display system. The head-up display is mainly configured to display driving information such as a speed and navigation on a display device (for example, a windshield) in front of a driver, to reduce line-of-sight transfer time of the driver, avoid a pupil change caused by a line-of-sight transfer of the driver, and improve traveling safety and comfort. For example, the HUD includes a combiner-HUD (combiner-HUD, C-HUD) system, a windshield-HUD (windshield-HUD, W-HUD) system, and an augmented reality HUD (augmented reality HUD, AR-HUD) system.

The intelligent driving device 100 may include an advanced driving assistance system (advanced driving assistant system, ADAS). The ADAS obtains information around the intelligent driving device by using a plurality of sensors (including but not limited to a lidar, a millimeter-wave radar, a camera apparatus, an ultrasonic sensor, a global positioning system, and an inertia measurement unit) on the intelligent driving device, and analyzes and processes the obtained information, to implement functions such as obstacle sensing, target recognition, intelligent driving device positioning, path planning, and driver monitoring/reminding. This improves driving safety, automation, and comfort of the intelligent driving device.

In terms of logical functions, the ADAS system generally includes three main functional modules: a sensing module, a decision-making module, and an execution module. The sensing module senses an environment around a vehicle body by using a sensor, and inputs corresponding real-time data to a processing center of a decision-making layer. The sensing module mainly includes a vehicle-mounted camera, an ultrasonic radar, a millimeter-wave radar, and a lidar. The decision-making module uses a computing apparatus and an algorithm to make a corresponding decision based on information obtained by the sensing module. After receiving a decision signal from the decision-making module, the execution module takes a corresponding action, for example, driving, lane change, steering, braking, or warning.

Under different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). L0 indicates no automation, L1 indicates driving support, L2 indicates partial automation, L3 indicates conditional automation, L4 indicates high automation, and L5 indicates full automation. Tasks of monitoring and responding to road conditions at the L1 to L3 levels are jointly completed by the driver and the system, and the driver needs to take over a dynamic driving task. L4 and L5 allow the driver to completely change to a role of a passenger. Currently, functions that can be implemented by the ADAS mainly include but are not limited to: adaptive cruise, automatic emergency braking, auto parking, blind spot monitoring, traffic warning/braking for a front crossroad, traffic warning/braking for a rear crossroad, preceding vehicle collision warning, lane deviation warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode. For example, the auto parking may include APA, RPA, AVP, and the like. For the APA, the driver does not need to operate a steering wheel, but still needs to operate a throttle and a brake on the intelligent driving device. For the RPA, the driver may use a terminal (for example, a mobile phone) to remotely park the intelligent driving device outside the intelligent driving device. For the AVP, the intelligent driving device may complete parking without the driver. In terms of the corresponding autonomous driving levels, the APA is approximately at a level of L1, the RPA is approximately at a level of L2 to L3, and the AVP is approximately at a level of L4.

In this embodiment of this application, the display apparatus 130 may display a parking location or a traveling location that can be selected by the user, and determine the target area in response to an operation of the user. The computing platform 150 controls, based on the determined target area, the intelligent driving device to travel from one of at least two boundaries of the target area to the target area.

FIG. 2 is a diagram of a system architecture for implementing a control method according to an embodiment of this application. A system 200 includes a sensing module 210, a parking area determining module 220, a human-computer interaction module 230, a planning and control module 240, and an executor 250. Specifically,
the sensing module 210 may include a road side unit (road side unit, RSU) in an area in which the intelligent driving device is located, or may include one or more camera apparatuses or one or more radar sensors in the sensing system 120 shown in FIG. 1, and is configured to collect information about an environment around the area in which the intelligent driving device is located, for example, information about a lane line, information about a parking spot line, and information about an obstacle. The sensing module 210 may further process collected information about an ambient environment, to establish a world model including a road, an obstacle, and the like for downstream modules (for example, the parking area determining module 220, the human-computer interaction module 230, and the planning and control module 240).

The drivable area determining module 220 may be one or more processors in the computing platform 150 shown in FIG. 1, or may be one or more processors in a cloud server associated with the vehicle 100 shown in FIG. 1. The parking area determining module 220 may determine a parking area and a non-parking area based on the parking spot line and/or the obstacle sensed by the sensing module 210, and further send information about the parking area and/or the non-parking area to the human-computer interaction module 230.

The human-computer interaction module 230 may include one or more display apparatuses 130 shown in FIG. 1, for example, may include an HMI. Alternatively, the human-computer interaction module 230 may further include a mobile terminal. The human-computer interaction module 230 may display one or more icons 1, or may display one or more icons 2, where the icon 1 indicates a parking area, and the icon 2 indicates a non-parking area. Further, in response to an operation of tapping the icon 1 by the user, the human-computer interaction module 230 may determine, as a target area, the parking area indicated by the icon 1, and send information about the target area to the planning and control module 240. The information about the target area may include actual location coordinates of the target area, and may further include information about whether the target area is occupied. In an example, the human-computer interaction module 230 may further control, in response to another operation of the user, the icon 1 indicating the target area to rotate or move, and send a rotation angle or a moved location of the icon 1 to the planning and control module. In still another example, the human-computer interaction module 230 may display a road image, where the road image includes a road boundary; and display the icon 1 in the road image in response to an operation of dragging the icon 1 by the user. Further, the human-computer interaction module 230 sends request information to the sensing module 210, to obtain information about an obstacle around the location indicated by the icon 1. After receiving the information that is about the obstacle and that is sent by the sensing module 210, the human-computer interaction module 230 adjusts the location of the icon 1 based on a location of the obstacle, and sends an adjusted location of the icon 1 to the planning and control module 240.

The planning and control module 240 may be one or more processors in the computing platform 150 shown in FIG. 1, or may be one or more processors in the cloud server associated with the intelligent driving device 100 shown in FIG. 1, and is configured to plan, based on information that is about the icon 1 and that is sent by the human-computer interaction module 230, a movement path through which the intelligent driving device travels from a current area to the target area indicated by the icon 1. In an example, the planning and control module 240 may control the intelligent driving device to travel from the boundary 1 or the boundary 2 of the target area indicated by the icon 1 to the target area. In another example, the planning and control module 240 may further replan a movement path for the intelligent driving device based on the rotation angle and the moved location of the icon 1.

Further, the planning and control module 240 calculates a corresponding control value based on the planned movement path, and outputs the control value to the executor 250.

When the executor 250 executes the control value, the intelligent driving device is controlled to travel to the target area based on the planned movement path. In some possible implementations, the executor may include a steering system and a braking control system in the intelligent driving device 100.

For example, the mobile terminal in embodiments of this application may include various handheld devices (for example, mobile phones), wearable devices, computing devices or other processing devices connected to a wireless modem, various forms of terminals, mobile stations, terminals, and user equipments, and the like that are associated with the intelligent driving device and that have a wireless communication function and a display function.

It should be understood that the foregoing modules are merely examples. In actual application, the foregoing modules may be added or deleted based on an actual requirement. For example, in the system architecture shown in FIG. 2, the parking area determining module and the planning and control module may be combined into one module.

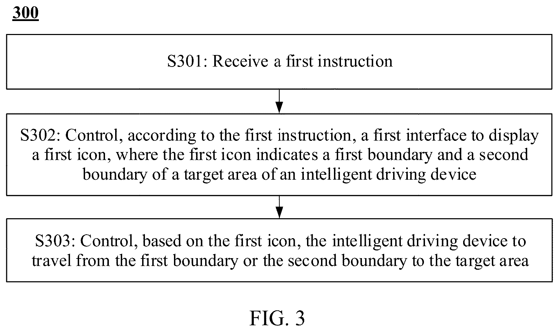

FIG. 3 is a schematic flowchart of a control method according to an embodiment of this application. A method 300 may be performed by the intelligent driving device 100 shown in FIG. 1. More specifically, the method 300 may be performed by the computing platform 150 in the intelligent driving device 100. Alternatively, the method 300 may be performed by the planning and control module 240 shown in FIG. 2. For example, the following uses an example in which the method 300 is performed by the computing platform 150 for description. The method 300 may include S301 to S303.

S301: Receive a first instruction.

For example, the first instruction may include but is not limited to: an instruction generated based on a voice instruction of a user; and an instruction generated based on an input of the user for a screen of a display apparatus or a mobile terminal.

In an example, the first instruction is generated when a specific voice instruction of the user is detected. The specific voice instruction may include but is not limited to: "Smart assistant, enable remote parking", "Smart assistant, park into the first location on the right", and "Smart assistant, turn the orientation of the virtual parking spot". The virtual parking spot may be an icon indicating a target area. For example, a current orientation of the virtual parking spot indicates a head orientation 1 of the intelligent driving device, that is, the intelligent driving device plans a movement path for the intelligent driving device based on the head orientation 1. After the orientation of the virtual parking spot is controlled to turn according to the voice instruction, when the intelligent driving device travels into an area indicated by the virtual parking spot, a tail of the intelligent driving device faces a direction 1.

In still another example, the input of the user for the screen of the display apparatus or the mobile terminal may include but is not limited to: single-finger tapping, double-finger tapping, or single-finger dragging of the user on the screen of the display apparatus or the mobile terminal.

S302: Control, according to the first instruction, a first interface to display a first icon, where the first icon indicates a first boundary and a second boundary of a target area of an intelligent driving device.

For example, the first interface may include a human-computer interaction interface, or may include a graphical user interface (graphical user interface, GUI) of an auto parking application, or may include a GUI of a driving assistance application.

For example, the first icon may include the icon 1 indicating the target area in the foregoing embodiment, or may include the icon 1 for adjusting a rotation angle or a location in response to an operation of the user.

S303: Control, based on the first icon, the intelligent driving device to travel from the first boundary or the second boundary to the target area.

For example, movement tracks of the intelligent driving device traveling from a current area to the target area are respectively planned based on the first boundary and the second boundary of the target area indicated by the first icon, and then one track is determined from the two movement tracks to control the intelligent driving device to travel.

In some possible implementations, when an obstacle exists on a first planned path, the intelligent driving device is controlled to travel from the first boundary to the target area, where the first planned path indicates the intelligent driving device to travel from the current area to the target area through the second boundary; or when an obstacle exists on a second planned path, the intelligent driving device is controlled to travel from the second boundary to the target area, where the second planned path indicates the intelligent driving device to travel from the current area to the target area through the first boundary.

In some possible implementations, the target area includes a parking area, the first interface further includes a second icon, the second icon indicates a non-parking area, and the controlling, according to the first instruction, a first interface to display a first icon includes: controlling, according to the first instruction, the first interface to display the first icon in a first color and display the second icon in a second color.

In some possible implementations, the first icon indicates a first pose of the intelligent driving device in the target area, and in S302, the controlling, according to a first instruction, a first interface to display a first icon includes: controlling, according to the first instruction, the first interface to switch from displaying a third icon to displaying the first icon, where the third icon indicates a second pose of the intelligent driving device in the target area.

Optionally, a head orientation that is indicated by the first pose and that is of the intelligent driving device is opposite to a head orientation that is indicated by the second pose and that is of the intelligent driving device.

Optionally, an included angle between a central axis that is indicated by the first pose and that is of the intelligent driving device and a central axis that is indicated by the second pose and that is of the intelligent driving device is greater than 0° and less than 180°.

In some possible implementations, the first interface is controlled to display a virtual device image according to a second instruction, where the virtual device image is located at a third location on the first interface, and the virtual device image indicates the current area of the intelligent driving device; and in S302, the controlling, according to the first instruction, a first interface to display a first icon includes: controlling, according to the first instruction and based on the third location, the first icon to be displayed at a fourth location on the first interface.

In some possible implementations, the first icon is controlled, according to the first instruction, to be displayed at a first location on the first interface; and when an obstacle exists in an actual area indicated by the first location, or a distance between a boundary of the actual area and the obstacle is less than or equal to a preset distance threshold, the first icon is controlled to be displayed at a second location of the first interface instead of the first icon.

For example, the preset distance threshold may be 5 centimeters, 10 centimeters, or another value.

In some possible implementations, the fourth location partially or completely coincides with the third location.

According to the control method provided in embodiments of this application, the traveling path may be planned based on a plurality of boundaries of the target area selected by the user. When the obstacle hinders the intelligent driving device from traveling from one boundary to the target area, the intelligent driving device may be controlled to travel from another boundary to the target area. This helps improve traveling efficiency and a parking success rate of the intelligent driving device, reduces a probability that the intelligent driving device collides with the obstacle, and improves safety of the intelligent driving device.

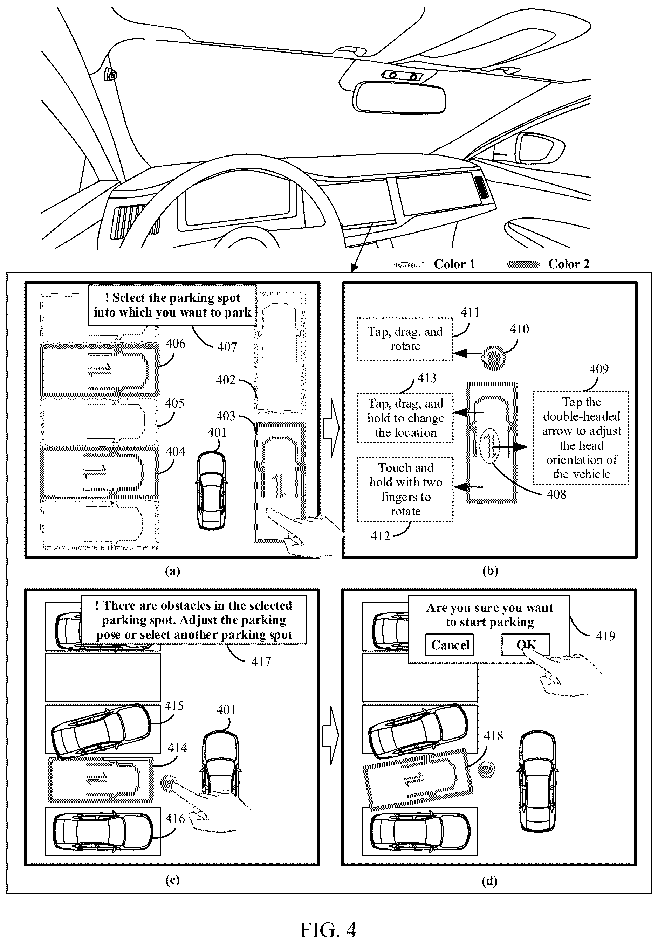

To make a reader better understand the solutions of this application, the following describes the solutions of this application with reference to FIG. 4 to FIG. 8. In FIG. 4 to FIG. 8, an example in which the intelligent driving device is a vehicle is used for description.

FIG. 4 shows a group of HMIs according to an embodiment of this application. FIG. 4 shows an example in which the method 300 is applied to a parking scenario.

As shown in (a) in FIG. 4, a vehicle indicated by an icon 401 is an example of the foregoing intelligent driving device. A location of the icon 401 on an interface indicates coordinates of an area in which the vehicle is actually located. The icon 401 may be understood as an example of the virtual device image in the foregoing embodiment. First-type icons (for example, the icon 2 in the foregoing embodiment) are displayed in a color 1: icons 402 and 405, where the first-type icon indicates a non-parking area; and second-type icons (for example, the icon 1 in the foregoing embodiment) are displayed in a color 2: icons 403, 404, and 406, where the second-type icon indicates a parking area. The icons 402 and 405 may be understood as examples of the second icon in the foregoing embodiment, and the icon 403 may be understood as an example of the first icon in the foregoing embodiment.

For example, when a user does not select a target area, the vehicle may prompt the user to select a parking area for parking, for example, display a dialog box 407 "! Select the parking spot into which you want to park" on the HMI. When it is detected that the user taps one of the second-type icons, the vehicle plans a movement path for the vehicle based on the icon.

For example, if it is detected that the user taps the icon 403, the vehicle plans a movement path for the vehicle based on the icon 403.

In some possible implementations, when a remote parking application is started in response to an operation of the user, an interface shown in (a) in FIG. 4 is displayed. In an implementation, if only one second-type icon exists on the interface shown in (a) in FIG. 4, the vehicle may directly plan a movement track based on the icon without an operation of a user.

In some possible implementations, in response to the operation of the user, when the remote parking application is started, only the icon of the vehicle and an image indicating information about an environment around the vehicle are displayed.

In an example, an icon creation button may further be displayed on the HMI, and the icon creation button is used to create the second-type icon. For example, information about an environment around an area in which the icon 401 indicating the vehicle is currently located is displayed on the HMI. The environment information may include an obstacle (for example, a vehicle or a pedestrian) around the vehicle and a blank area. The blank area may be understood as an area in which the vehicle may travel. After tapping the icon creation button, the user may tap the blank area on the HMI, and in response to the operation of tapping the icon creation button and the blank area by the user, a second-type icon is created and displayed in the blank area. Further, the vehicle plans a movement path for the vehicle based on the icon.

In still another example, in response to an operation of touching and holding the icon 401 by the user, a second-type icon may alternatively be created and displayed at the icon 401. Further, the user may adjust a location of the second-type icon by dragging or tapping the second-type icon. When it is determined, in response to the operation of the user, that the user adjusts the second-type icon to a location and a posture that are required by the user, the vehicle plans a movement path for the vehicle based on an adjusted icon.

It should be noted that the foregoing creation method for the second-type icon is merely an example for description. In a specific implementation process, the second-type icon may alternatively be created by using another method.

In some possible implementations, an adjustment method for the second-type icon may further be displayed on the HMI.

As shown in (b) in FIG. 4, the second-type icon may include a double-headed arrow 408, and the double-headed arrow 408 may be used to adjust an orientation of the second-type icon, to adjust a head orientation of the vehicle after the vehicle travels into a target area indicated by the icon. For example, a dialog box 409 "Tap the double-headed arrow to adjust the head orientation of the vehicle" may be displayed on the HMI, to prompt the user with usage of the double-headed arrow 408. The second-type icon may further include a rotation button 410. The rotation button 410 is used to adjust a rotation angle of the second-type icon, to adjust a pose of the vehicle after the vehicle travels into the target area indicated by the icon. In an example, a dialog box 411 "Tap, drag, and rotate" may be displayed on the HMI, to prompt the user with usage of the rotation button 410. In still another example, a dialog box 412 "Touch and hold with two fingers to rotate" may be displayed on the HMI, to prompt the user with another manner of adjusting the rotation angle of the icon. In still another example, a dialog box 411 "Tap, drag, and hold to change the location" may be displayed on the HMI, to prompt the user with a method for adjusting the location of the icon. It should be noted that, after the location of the icon changes, the target area of the vehicle also changes to an actual area indicated by a changed location of the icon.

In some possible implementations, before the user determines one second-type icon, only the first-type icon and the second-type icon may be displayed on the HMI. When it is detected that the user selects the second-type icon, information about an obstacle around a target area indicated by the icon may be displayed on the HMI. Further, when the obstacle exists around the target area indicated by the icon, the vehicle may prompt the user to adjust a selection angle and/or the location of the icon, to avoid scratching the vehicle by the obstacle in a moving process.

As shown in (c) in FIG. 4, an icon 414 is an icon that is determined by a system or selected by the user and that indicates a target area, and an obstacle 415 and an obstacle 416 exist around the target area indicated by the icon 414. In addition, the obstacle 415 intrudes into the target area indicated by the icon 414. In this case, a dialog box 417 "! There are obstacles in the selected parking spot. Adjust the parking pose or select another parking spot" is displayed on the HMI. Further, after receiving the prompt information, the user taps a rotation button of the icon 414, to adjust a pose of the icon 414 to that shown in (d) in FIG. 4. When detecting that the pose of the icon is adjusted, the vehicle determines that a distance between a target area indicated by the adjusted icon 418 and the obstacle is greater than a system preset distance, and controls the HMI to display a dialog box 419 "Are you sure you want to start parking: Cancel/OK". When it is detected that the user taps an "OK" button, the vehicle is controlled to travel to the target area indicated by the icon 418.

For example, the system preset distance may be 5 centimeters, 10 centimeters, or another value.

It should be noted that the icon 414 may be understood as an example of the third icon in the foregoing embodiment, and the icon 418 may be understood as an example of the first icon in the foregoing embodiment.

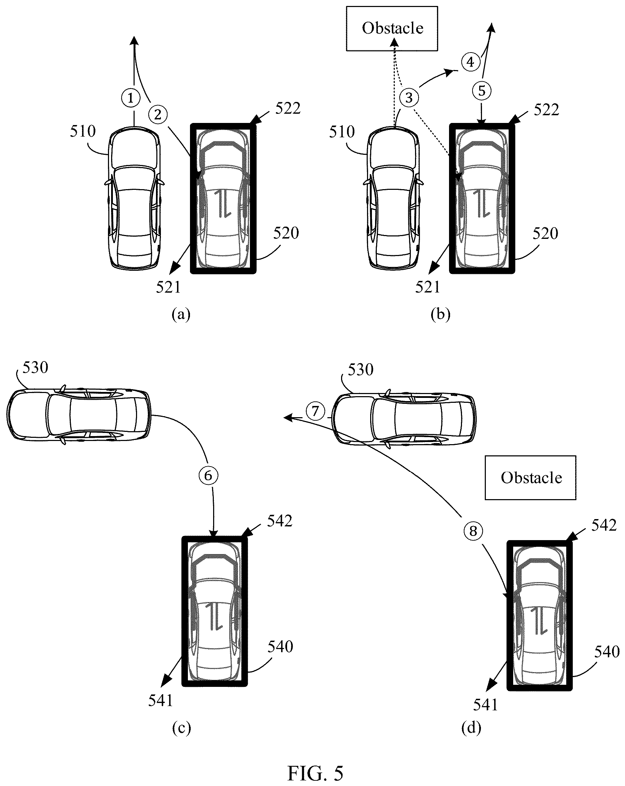

FIG. 5 is a diagram of different movement tracks planned based on the first icon.

In some possible implementations, a default boundary may be determined based on a relative location relationship between the vehicle and the target area indicated by the first icon, and then a movement path through which the vehicle travels from the first boundary to the target area is planned based on the default boundary. For example, the target area indicated by the first icon is enclosed by two long sides and two short sides. When the long side of the target area is parallel to a central axis of the vehicle, a long side close to the vehicle is the default boundary. When the long side of the target area is perpendicular to a central axis of the vehicle, a short side close to the vehicle is the default boundary.

As shown in (a) in FIG. 5, a target area indicated by an icon 520 includes a short side 522 and a long side 521. It can be learned from the figure that, if a central axis that is of the vehicle and that is indicated by an icon 510 is parallel to the long side of the target area, the long side 521 is determined as the default boundary. Further, a movement path 1 through which the vehicle travels into the target area is planned. The movement path 1 includes a path ① and a path ②.

In some possible implementations, if an obstacle on the path ① and/or an obstacle on the path ② hinder/hinders the vehicle from traveling, a movement path of the vehicle may be planned based on the short side 522.

As shown in (b) in FIG. 5, there is an obstacle on the movement path through which the vehicle travels from the boundary 521 into the target area. In this case, a movement path 2 through which the vehicle travels into the target area is planned based on the short side 522, and the movement path 2 includes a path ③, a path ④ and a path ⑤.

As shown in (c) in FIG. 5, a target area indicated by an icon 540 includes a short side 542 and a long side 541. It can be learned from the figure that, if a central axis that is of the vehicle and that is indicated by the icon 530 is perpendicular to the long side of the target area, the short side 542 is determined as the default boundary. Further, a movement path 3 through which the vehicle travels into the target area is planned. The movement path 3 includes the path ⑥.

As shown in (d) in FIG. 5, there is an obstacle on a movement path through which the vehicle travels from the boundary 542 into the target area. In this case, a movement path 4 through which the vehicle travels into the target area is planned based on the long side 541, and the movement path 4 includes a path ⑦ and a path ⑧.

It should be noted that the long side 521 and the long side 541 may be understood as some examples of the first boundary in the foregoing embodiment; the short side 522 and the short side 542 may be understood as some examples of the second boundary in the foregoing embodiment; the movement path 1 and the movement path 3 are some examples of the first planned path in the foregoing embodiment; and the movement path 2 and the movement path 4 are some examples of the second planned path in the foregoing embodiment.

It should be noted that a location relationship between the vehicle and the target area shown in FIG. 5 is merely an example for description. In a specific implementation process, an included angle between the central axis of the vehicle and the long side of the target area may alternatively be an angle other than 0° and 90°.

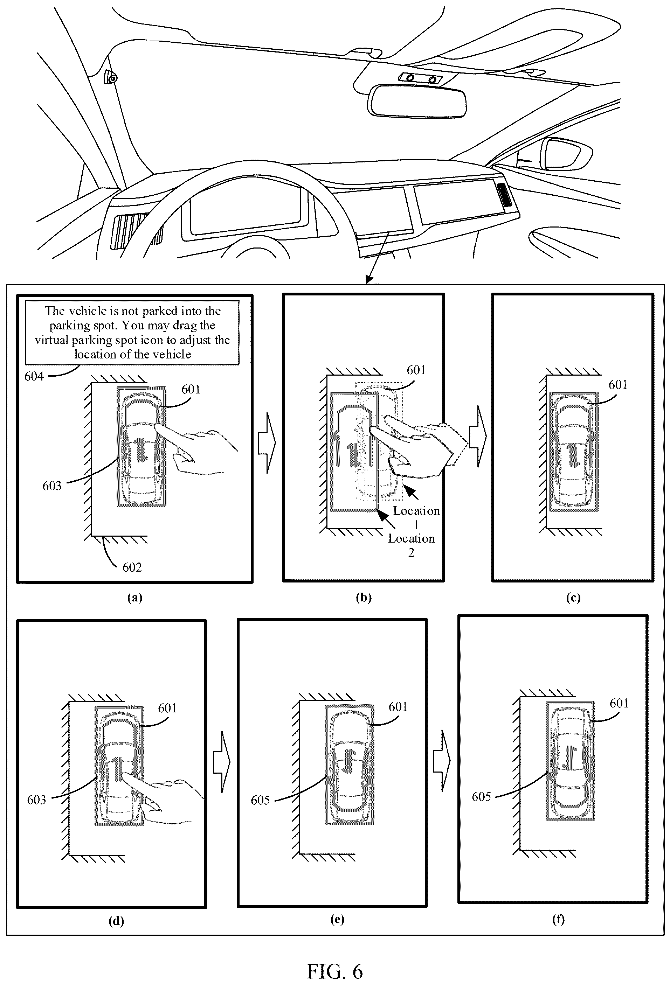

FIG. 6 shows another group of HMIs according to an embodiment of this application. FIG. 6 shows another example in which the method 300 is applied to a parking scenario.

In some possible implementations, after the vehicle is parked, a vehicle body may not be completely located in a parking spot. In this case, a location of the vehicle in the parking spot may be adjusted by using the method in embodiments of this application.

As shown in (a) in FIG. 6, a part of a vehicle body of the vehicle indicated by an icon 601 is located outside a parking spot indicated by an icon 602. For example, a dialog box 604 "The vehicle is not parked into the parking spot. You may drag the virtual parking spot icon to adjust the location of the vehicle" may be displayed on the HMI, to prompt the user with a manner of adjusting the location of the vehicle. The virtual parking spot icon may be an icon 603. Further, the user may drag the icon 603 from a current location to another location.

As shown in (b) in FIG. 6, in response to the operation of the user, the icon 603 is dragged from a location 1 to a location 2. Further, the vehicle controls, based on a target area indicated by the location 2, the vehicle to travel from the location 1 to the location 2. After the vehicle travels to the location 2, a location of the icon 601 is shown in (c) in FIG. 6.

In some possible implementations, after the vehicle is parked, images of the vehicle and the parking spot, for example, the icon 601 and the icon 602, are displayed in response to a first preset operation of the user. Further, in response to a second preset operation of the user, an icon 603 is created and displayed at the location 2. Further, the vehicle controls, based on the target area indicated by the location 2, the vehicle to travel from the location 1 to the location 2.

For example, the first preset operation may be sending a voice instruction that instructs the HMI to display images of the vehicle and a parking location of the vehicle, or may be an operation of pressing a specific button for the HMI to display the images of the vehicle and the parking location of the vehicle, or may be another operation. The second preset operation may be an operation of pressing the icon creation button in the foregoing embodiment, or may be an operation of touching and holding the icon 601, or may be another operation.

For example, the first preset operation may be understood as an example of an operation of generating the second instruction, and the second preset operation may be understood as an example of an operation of generating the first instruction.

It should be noted that the location 1 may be understood as an example of the third location in the foregoing embodiment, and the location 2 may be understood as an example of the fourth location in the foregoing embodiment.

In some possible implementations, a head orientation of the vehicle in the current parking area may be further adjusted by tapping a double-headed arrow of the icon 603.

As shown in (d) in FIG. 6, the icon 601 indicates that a head of the vehicle currently faces upward (faces upward on an HMI), and after the vehicle is parked into the target area, the head of the vehicle indicated by the icon 603 faces upward. In response to an operation of tapping the double-headed arrow of the icon 603 by the user, the icon 603 is changed to an icon 605 shown in (e) in FIG. 6, and after the vehicle is parked into the target area, the head of the vehicle indicated by the icon 605 faces downward (faces downward on the HMI). The vehicle controls, based on the icon 605, the head to adjust from a current orientation (referred to as a direction 1 in the following) to a direction (referred to as a direction 2 in the following) opposite to the current orientation. For example, the vehicle travels out of the current area, and then travels into the area indicated by the icon 605 with the head facing the direction 2. After the head orientation of the vehicle is adjusted from the direction 1 to the direction 2, an orientation of the icon 601 is shown in (f) in FIG. 6.

It may be understood that the icon 603 is an example of the third icon in the foregoing embodiment, and the icon 605 is an example of the first icon in the foregoing embodiment.

It should be noted that the application scenario shown in FIG. 6 is merely an example for description, and the method for adjusting the parking location and the parking pose of the vehicle shown in FIG. 6 may be further applied to another scenario.

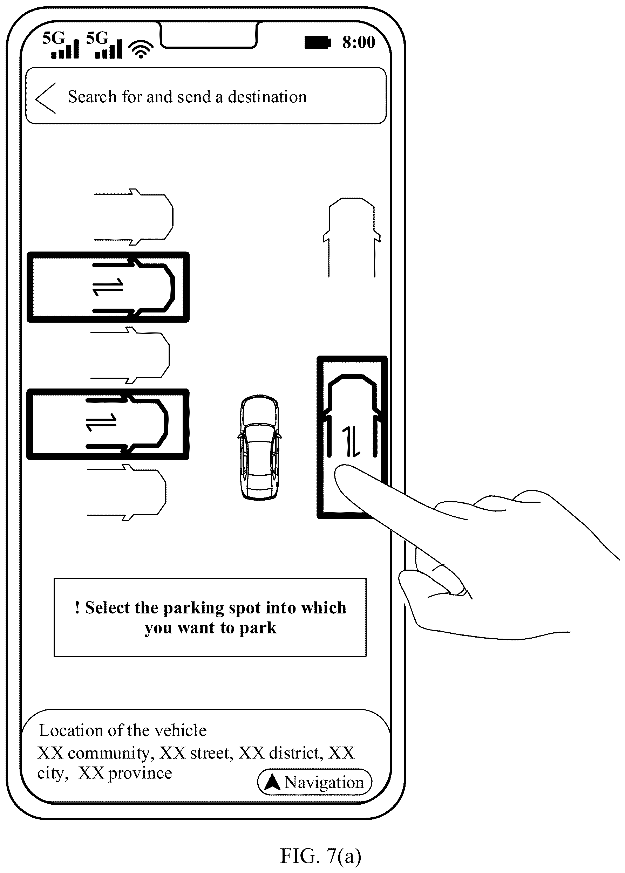

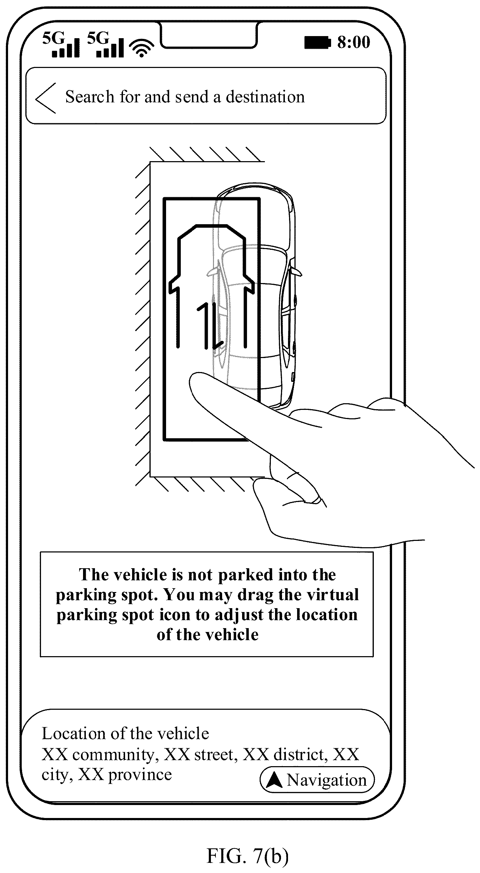

It should be further noted that FIG. 4 and FIG. 6 show a method for interacting with the user by using a vehicle-mounted screen to control the vehicle to travel to the target area. In a specific implementation process, the foregoing procedure of interaction with the user may also be implemented by using a screen of the mobile terminal, for example, as shown in FIG. 7(a) and FIG. 7(b). A method for controlling, by using the mobile terminal, the vehicle to travel to the target area is similar to the method for controlling, by using the vehicle-mounted screen, the vehicle to travel to the target area. Therefore, reference may be made to the descriptions in the foregoing embodiment. Details are not described herein again.

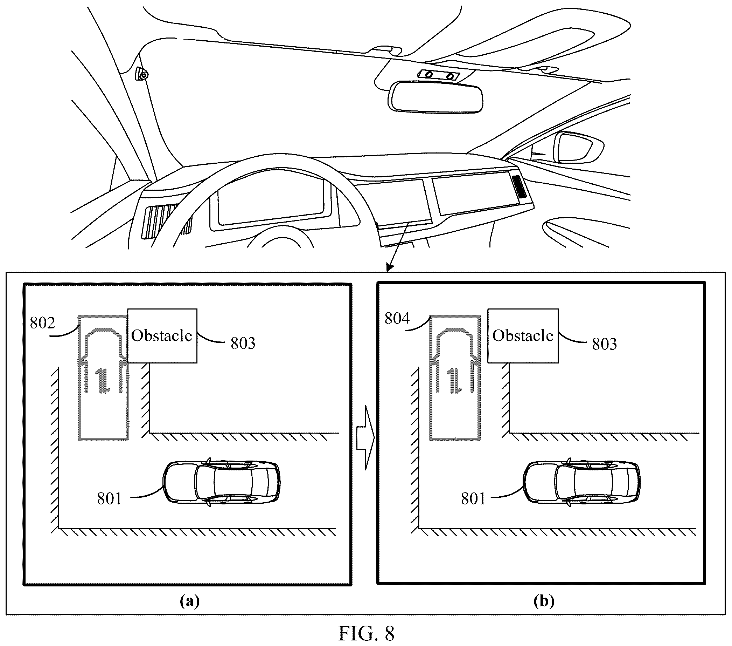

FIG. 8 shows another group of HMIs according to an embodiment of this application. FIG. 8 shows an example in which the method 300 is applied to a traveling scenario.

An icon 801 and an icon 802 indicating a target area are shown in (a) in FIG. 8. The icon 801 indicates a vehicle traveling on a road. A movement path for the vehicle may be planned based on the target area indicated by the icon 802 and an area in which the vehicle is currently located, and the vehicle is controlled to travel, based on a planned movement path, to the target area indicated by the icon 802.

In some possible implementations, an obstacle, for example, an obstacle 803 shown in the figure, intrudes into the target area indicated by the icon 802. In this case, the vehicle may adjust, based on an actual location of the obstacle 803 or based on a location of the obstacle 803 on an HMI, a location of the icon 802 to an icon 804 shown in (b) in FIG. 8. In this way, when the vehicle travels into the target area indicated by the icon 804, the vehicle does not scratch the obstacle 803.

It may be understood that the location of the icon 802 on the HMI is an example of the first location in the foregoing embodiment, and a location of the icon 804 on the HMI is an example of the second location in the foregoing embodiment.

In some possible implementations, when an intelligent driving device is in a traveling scenario, and a speed of the intelligent driving device is lower than a preset speed threshold, the intelligent driving device is controlled, based on an HMI shown in FIG. 8, to travel.

For example, the preset speed threshold may be 10 kilometers per hour (kilometers per hour, kph), or may be 15 kph, or may be another speed.

In various embodiments of this application, unless otherwise stated or there is a logic conflict, terms and/or descriptions in different embodiments are consistent and may be mutually referenced, and technical features in various embodiments may be combined based on an internal logical relationship thereof, to form a new embodiment.

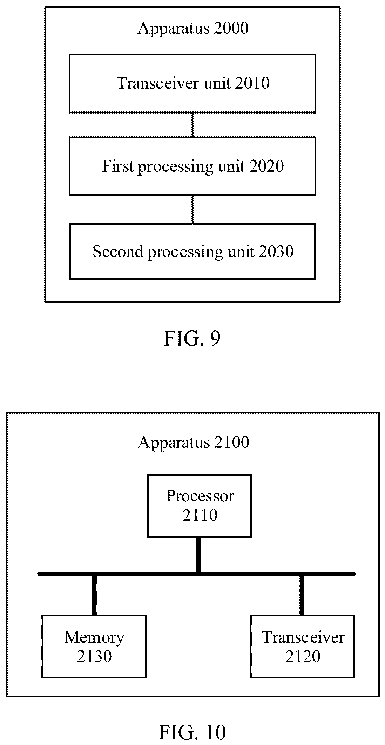

The foregoing describes in detail the methods provided in embodiments of this application with reference to FIG. 1 to FIG. 8. The following describes in detail the apparatuses provided in embodiments of this application with reference to FIG. 9 and FIG. 10. It should be understood that descriptions of the apparatus embodiments correspond to descriptions of the method embodiments. Therefore, for content that is not described in detail, refer to the foregoing method embodiments. For brevity, details are not described herein again.

FIG. 9 is a block diagram of a control apparatus 2000 according to an embodiment of this application. The apparatus 2000 includes a transceiver unit 2010, a first processing unit 2020, and a second processing unit 2030.

The apparatus 2000 may include units configured to perform the method in FIG. 3. In addition, the units in the apparatus 2000 are separately used to implement corresponding procedures of the method embodiment in FIG. 3.

When the apparatus 2000 is configured to perform the method 300 in FIG. 3, the transceiver unit 2010 may be configured to perform S301 in the method 300, the first processing unit 2020 may be configured to perform S302 in the method 300, and the second processing unit 2030 may be configured to perform S303 in the method 300.

Specifically, the transceiver unit 2010 is configured to receive a first instruction. The first processing unit 2020 is configured to control, according to the first instruction, a first interface to display a first icon, where the first icon indicates a first boundary and a second boundary of a target area of an intelligent driving device. The second processing unit 2030 is configured to control, based on the first icon, the intelligent driving device to travel from the first boundary or the second boundary to the target area.

Optionally, the second processing unit 2030 is configured to: when an obstacle exists on a first planned path, control the intelligent driving device to travel from the first boundary to the target area, where the first planned path indicates the intelligent driving device to travel from a current area to the target area through the second boundary; or when an obstacle exists on a second planned path, control the intelligent driving device to travel from the second boundary to the target area, where the second planned path indicates the intelligent driving device to travel from the current area to the target area through the first boundary.

Optionally, the first processing unit 2020 is configured to: control, according to the first instruction, the first icon to be displayed at a first location on the first interface; and when an obstacle exists in an actual area indicated by the first location, or a distance between a boundary of the actual area and the obstacle is less than or equal to a preset distance threshold, control the first icon to be displayed at a second location of the first interface instead of the first location.

Optionally, the first processing unit 2020 is further configured to: control, according to a second instruction, the first interface to display a virtual device image, where the virtual device image is located at a third location on the first interface, and the virtual device image indicates the current area of the intelligent driving device; and control, according to the first instruction and based on the third location, the first icon to be displayed at a fourth location on the first interface.

Optionally, the fourth location partially or completely coincides with the third location.

Optionally, the target area includes a parking area, the first interface further includes a second icon, the second icon indicates a non-parking area, and the first processing unit 2020 is configured to: control, according to the first instruction, the first interface to display the first icon in a first color and display the second icon in a second color.

Optionally, the first icon indicates a first pose of the intelligent driving device in the target area, and the first processing unit 2020 is configured to: control, according to the first instruction, the first interface to switch from displaying a third icon to displaying the first icon, where the third icon indicates a second pose of the intelligent driving device in the target area.

Optionally, a head orientation that is indicated by the first pose and that is of the intelligent driving device is opposite to a head orientation that is indicated by the second pose and that is of the intelligent driving device.

Optionally, an included angle between a central axis that is indicated by the first pose and that is of the intelligent driving device and a central axis that is indicated by the second pose and that is of the intelligent driving device is greater than 0° and less than 180°.

For example, the transceiver unit 2010, the first processing unit 2020, and the second processing unit 2030 may be disposed in the intelligent driving device 100 shown in FIG. 1. More specifically, the foregoing units may be disposed in the computing platform 150 shown in FIG. 1. For example, the transceiver unit 2010, the first processing unit 2020, and the second processing unit 2030 may alternatively be disposed in the system shown in FIG. 2. More specifically, the transceiver unit 2010 and the first processing unit 2020 may be disposed in the human-computer interaction module 230, and the second processing unit may be disposed in the planning and control module 240.

It should be understood that division into units of the foregoing apparatus is merely logical function division, and during actual implementation, all or some of the units may be integrated into a physical entity, or the units may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. For example, the processor is a general purpose processor, for example, a CPU or a microprocessor, and the memory is a memory in the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD, for example, an FPGA, and the FPGA may include a large quantity of logic gate circuits, and a connection relationship between the logic gate circuits is configured by using a configuration file, to implement the functions of some or all of the foregoing units. All the units of the foregoing apparatus may be implemented in the form of software invoked by the processor, or may be implemented in the form of hardware circuit, or some of the units are implemented in the form of software invoked by the processor, and remaining units are implemented in the form of hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a specific implementation process, the operations performed by the transceiver unit 2010, the first processing unit 2020, and the second processing unit 2030 may be performed by one processor, or may be performed by different processors. In a specific implementation process, the one or more processors may be processors disposed in the computing platform 150 shown in FIG. 1, or the apparatus 2000 may be a chip disposed in the intelligent driving device 100.

FIG. 10 is a block diagram of a control apparatus according to an embodiment of this application. The control apparatus 2100 shown in FIG. 10 may include a processor 2110, a transceiver 2120, and a memory 2130. The processor 2110, the transceiver 2120, and the memory 2130 are connected by using an internal connection path. The memory 2130 is configured to store instructions. The processor 2110 is configured to execute the instructions stored in the memory 2130, to implement the control methods in the foregoing embodiments. Optionally, the memory 2130 may be coupled to the processor 2110 by using an interface, or may be integrated with the processor 2110.

It should be noted that the transceiver 2120 may include but is not limited to a transceiver apparatus of an input/output interface (input/output interface) type, to implement communication between the apparatus 2100 and another device or a communication network.

The memory 2130 may be a read-only memory (read-only memory, ROM), a static storage device, a dynamic storage device, or a random access memory (random access memory, RAM).

The transceiver 2120 uses, for example, but is not limited to, a transceiver apparatus of a transceiver type, to implement communication between the apparatus 2100 and another device or a communication network, to receive/send data/information used to implement the methods in the foregoing embodiments.

In a specific implementation process, the apparatus 2100 may be disposed in the computing platform 150 shown in FIG. 1, or the apparatus may be disposed in the planning and control module 240 shown in FIG. 2.

An embodiment of this application further provides an intelligent driving device. The intelligent driving device includes the foregoing apparatus 2000 or the foregoing apparatus 2100.

In some possible implementations, the intelligent driving device may be a vehicle.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, steps in the foregoing methods can be implemented by using a hardware integrated logic circuit in a processor, or by using instructions in a form of software. The method disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

It may be clearly understood by a person skilled in the art that, for the purpose of convenient and brief description, for detailed working processes of the foregoing systems, apparatuses, and units, refer to corresponding processes in the foregoing method embodiments. Details are not described herein.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
receiving a first instruction;
controlling, according to the first instruction, a first interface to display a first icon, wherein the first icon indicates a first boundary and a second boundary of a target area of an intelligent driving device; and
controlling, based on the first icon, the intelligent driving device to travel from the first boundary or the second boundary to the target area.

2. The method according to claim 1, wherein the controlling the intelligent driving device to travel from the first boundary or the second boundary to the target area comprises:
when an obstacle exists on a first planned path, controlling the intelligent driving device to travel from the first boundary to the target area, wherein the first planned path indicates the intelligent driving device to travel from a current area to the target area through the second boundary; or
when an obstacle exists on a second planned path, controlling the intelligent driving device to travel from the second boundary to the target area, wherein the second planned path indicates the intelligent driving device to travel from the current area to the target area through the first boundary.

3. The method according to claim 1 or 2, wherein the controlling, according to the first instruction, a first interface to display a first icon comprises:
controlling, according to the first instruction, the first icon to be displayed at a first location on the first interface; and
when an obstacle exists in an actual area indicated by the first location, or a distance between a boundary of the actual area and the obstacle is less than or equal to a preset distance threshold, controlling the first icon to be displayed at a second location of the first interface instead of the first location.

4. The method according to any one of claims 1 to 3, wherein the method further comprises:
controlling, according to a second instruction, the first interface to display a virtual device image, wherein the virtual device image is located at a third location on the first interface, and the virtual device image indicates the current area of the intelligent driving device; and
the controlling, according to the first instruction, a first interface to display a first icon comprises:
controlling, according to the first instruction and based on the third location, the first icon to be displayed at a fourth location on the first interface.

5. The method according to claim 4, wherein the fourth location partially or completely coincides with the third location.

6. The method according to any one of claims 1 to 5, wherein the target area comprises a parking area, the first interface further comprises a second icon, the second icon indicates a non-parking area, and the controlling, according to the first instruction, a first interface to display a first icon comprises:
controlling, according to the first instruction, the first interface to display the first icon in a first color and display the second icon in a second color.

7. The method according to any one of claims 1 to 6, wherein the first icon indicates a first pose of the intelligent driving device in the target area, and the controlling, according to the first instruction, a first interface to display a first icon comprises:
controlling, according to the first instruction, the first interface to switch from displaying a third icon to displaying the first icon, wherein the third icon indicates a second pose of the intelligent driving device in the target area.

8. The method according to claim 7, wherein a head orientation that is indicated by the first pose and that is of the intelligent driving device is opposite to a head orientation that is indicated by the second pose and that is of the intelligent driving device.

9. The method according to claim 7, wherein an included angle between a central axis that is indicated by the first pose and that is of the intelligent driving device and a central axis that is indicated by the second pose and that is of the intelligent driving device is greater than 0 degrees and less than 180 degrees.

10. A control apparatus, comprising:
a transceiver unit, configured to receive a first instruction;
a first processing unit, configured to control, according to the first instruction, a first interface to display a first icon, wherein the first icon indicates a first boundary and a second boundary of a target area of an intelligent driving device; and
a second processing unit, configured to control, based on the first icon, the intelligent driving device to travel from the first boundary or the second boundary to the target area.

11. The apparatus according to claim 10, wherein the second processing unit is configured to:
when an obstacle exists on a first planned path, control the intelligent driving device to travel from the first boundary to the target area, wherein the first planned path indicates the intelligent driving device to travel from a current area to the target area through the second boundary; or
when an obstacle exists on a second planned path, control the intelligent driving device to travel from the second boundary to the target area, wherein the second planned path indicates the intelligent driving device to travel from the current area to the target area through the first boundary.

12. The apparatus according to claim 10 or 11, wherein the first processing unit is configured to:
control, according to the first instruction, the first icon to be displayed at a first location on the first interface; and
when an obstacle exists in an actual area indicated by the first location, or a distance between a boundary of the actual area and the obstacle is less than or equal to a preset distance threshold, control the first icon to be displayed at a second location of the first interface instead of the first location.

13. The apparatus according to any one of claims 10 to 12, wherein the first processing unit is further configured to:
control, according to a second instruction, the first interface to display a virtual device image, wherein the virtual device image is located at a third location on the first interface, and the virtual device image indicates the current area of the intelligent driving device; and
control, according to the first instruction and based on the third location, the first icon to be displayed at a fourth location on the first interface.

14. The apparatus according to claim 13, wherein the fourth location partially or completely coincides with the third location.

15. The apparatus according to any one of claims 10 to 14, wherein the target area comprises a parking area, the first interface further comprises a second icon, the second icon indicates a non-parking area, and the first processing unit is configured to:
control, according to the first instruction, the first interface to display the first icon in a first color and display the second icon in a second color.

16. The apparatus according to any one of claims 10 to 15, wherein the first icon indicates a first pose of the intelligent driving device in the target area, and the first processing unit is configured to:
control, according to the first instruction, the first interface to switch from displaying a third icon to displaying the first icon, wherein the third icon indicates a second pose of the intelligent driving device in the target area.

17. The apparatus according to claim 16, wherein a head orientation that is indicated by the first pose and that is of the intelligent driving device is opposite to a head orientation that is indicated by the second pose and that is of the intelligent driving device.

18. The apparatus according to claim 16, wherein an included angle between a central axis that is indicated by the first pose and that is of the intelligent driving device and a central axis that is indicated by the second pose and that is of the intelligent driving device is greater than 0 degrees and less than 180 degrees.

19. A control apparatus, comprising:
a memory, configured to store a computer program; and
a processor, configured to execute the computer program stored in the memory, for the apparatus to perform the method according to any one of claims 1 to 9.

20. An intelligent driving device, comprising the apparatus according to any one of claims 10 to 19.

21. A computer-readable storage medium, wherein the computer-readable storage medium stores instructions, and when the instructions are executed by a processor, the processor is enabled to implement the method according to any one of claims 1 to 9.

22. A chip, wherein the chip comprises a circuit, and the circuit is configured to perform the method according to any one of claims 1 to 9.
